# EUROPÄISCHE PATENTSCHRIFT

(11) **EP 1 236 247 B1**
(45) Veröffentlichungstag und Bekanntmachung des Hinweises auf die Patenterteilung: **06.09.2006**
(21) Anmeldenummer: 99974255.4
(22) Anmeldetag: 08.12.1999
(51) Int. Cl.: H01R 13/719, H04B 3/56

(54) **ANORDNUNG ZUR ÜBERMITTLUNG VON NACHRICHTEN ÜBER EIN NIEDERSPANNUNGS-STROMVERSORGUNGSNETZ**
ASSEMBLY FOR TRANSMITTING INFORMATION VIA A LOW-VOLTAGE POWER SUPPLY NETWORK
DISPOSITIF DE TRANSMISSION D'INFORMATIONS PAR UN RESEAU D'ALIMENTATION BASSE TENSION

(43) Veröffentlichungstag der Anmeldung: 04.09.2002
(73) Patentinhaber: Current Communications International Holding GmbH, 5506 Mägenwil (CH)
(72) Erfinder: MÜLLER, Kurt, CH-8610 Uster (CH); WIDMER, Hanspeter, CH-5507 Mellingen (CH)
(74) Vertreter: Roshardt, Werner Alfred
(86) Internationale Anmeldenummer: PCT/CH1999/000592
(87) Internationale Veröffentlichungsnummer: WO 2001/043238

(56) Entgegenhaltungen:
- US-A- 5 066 939
- US-A- 5 115 368

## Beschreibung

### Technisches Gebiet

Die Erfindung betrifft eine Anordnung zur Übermittlung von Nachrichten über ein Niederspannungs-Stromversorgungsnetz, umfassend ein erstes und ein zweites Datenendgerät, sowie eine Kuppelvorrichtung.

### Stand der Technik

Die elektronische Kommunikation, d.h. die Übertragung von Daten in elektronischer Form, gewinnt zunehmend an Bedeutung. Sei es, um einem Bankfachmann die aktuellsten Börsendaten direkt auf seinen Schreibtisch zu liefern oder bereits auf dem Rückweg aus dem Winterurlaub ferngesteuert die Heizung zu Hause einzuschalten. Die Generierung und Verarbeitung der entsprechenden Daten erfolgt zumeist in Datenendgeräten wie beispielsweise Computern, welche zwecks Energieversorgung an das Stromversorgungsnetz angeschlossen sind.

Ein möglicher Transportweg für solche Daten ist das Stromversorgungsnetz selber. Nachrichten wie Telefongespräche, Telekopien, digitale Daten usw. über Niederspannungs-Stromversorgungsnetze zu übertragen, ist bekannt. Zu diesem Zweck werden die Nachrichten codiert und einem hochfrequenten Trägersignal in bekannter Weise, z. B. durch Frequenzmodulation aufgeprägt. Das modulierte Trägersignal wird vom jeweiligen Sender in das Niederspannungs-Stromversorgungsnetz eingekoppelt und vom jeweiligen Empfänger in gleicher Weise wieder ausgekoppelt und decodiert. Nachrichtenübertragungssysteme, die auf diese Weise ein Stromversorgungsnetz benützen, sind z. B. in WO-A-95/29 537 beschrieben.

Zum Ein- bzw. Auskoppeln der Nachrichten resp. des modulierten Trägersignals in das bzw. aus dem Niederspannungs-Stromversorgungsnetz werden Koppler verwendet, welche ihrerseits an das Niederspannungs-Stromversorgungsnetz angeschlossen werden.

Durch verschiedene Vorgänge können in Niederspannungs-Stromversorgungsnetzen hochfrequente Störungen entstehen, welche das Trägersignal überlagern, mit ausgekoppelt werden und u. U. die Qualität der Nachrichtenübertragung empfindlich beeinträchtigen. Dadurch werden Wiederholungen von Übermittlungen erforderlich, was eine Reduktion der Datenrate nach sich zieht. Derartige Störungen am Empfänger zu unterdrücken, ist oft nur mit beträchtlichem schaltungstechnischem Aufwand oder gar nicht möglich. Dabei stammen die stärksten Störsignale oft aus dem Nahbereich der am Nachrichtenaustausch beteiligten Geräte wie beispielsweise einem zur Verarbeitung der empfangenen Nachrichten vorgesehenen Computer oder von Reflexionen an offenen Leitungsabschlüssen.

Solche Anordnungen zur Datenübertragung über Stromversorgungsnetze haben daher verschiedene Nachteile. Zum einen gelangen Störsignale ungefiltert in das Stromversorgungsnetz und werden den modulierten Trägersignalen überlagert, und zum andern wird bei jedem Datenendgerät neben dem Geräte-Netzanschluss resp. überall dort, wo Daten in das Stromversorgungsnetz ein- bzw. ausgekoppelt werden sollen, ein zusätzlicher Netzanschluss für die Koppelvorrichtung benötigt.

### Darstellung der Erfindung

Aufgabe der Erfindung ist es, eine Anordnung der eingangs erwähnten Art anzugeben, welche die beim Stand der Technik vorhandenen Probleme vermeidet und bezüglich ihrer Eignung für die Übertragung von Nachrichten wesentlich verbessert ist sowie eine zur Verwendung in der erfindungsgemässen Anordnung geeignete Kuppelvorrichtung.

Die Lösung der Aufgabe ist durch die Merkmale des Anspruchs 1 definiert. Gemäss der Erfindung umfasst die Anordnung zur Übermittlung von Nachrichten über ein Niederspannungs-Stromversorgungsnetz ein erstes und ein zweites Datenendgerät zwischen denen die Nachrichten übermittelt werden, wobei das erste Datenendgerät über zumindest eine Kuppelvorrichtung an das Niederspannungs-Stromversorgungsnetz angeschlossen ist. Jede Kuppelvorrichtung weist hierzu neben einem Netzanschluss zum Anschliessen der Kuppelvorrichtung an das Niederspannungs-Stromversorgungsnetz und einem Geräteanschluss zum Anschliessen eines mit elektrischer Energie zu versorgenden Gerätes an die Kuppelvorrichtung einen kombinierten Daten/Netzanschluss auf. Über diesen Daten/Netzanschluss werden gleichzeitig zum Versorgungssignal die diesem überlagerten Nachrichten übertragen.

Durch das Zwischenschalten einer Kuppelvorrichtung zwischen das Niederspannungs-Stromversorgungsnetz und die daran anzuschliessenden Geräte wie das erste Datenendgerät steht bei jeder Kuppelvorrichtung ein Netzzugang zum Ein- bzw. Auskoppeln der Nachrichten in das bzw. aus dem Niederspannungs-Stromversorgungsnetz zur Verfügung und es werden keine zusätzlichen Netzsteckdosen für den Anschluss der entsprechenden Koppler benötigt.

Das erste Datenendgerät weist vorzugsweise einen Nachrichtenanschluss und einen Netzanschluss auf. Der Netzanschluss ist derart ausgebildet, dass das Datenendgerät damit zwecks Versorgung mit elektrischer Energie an das Niederspannungs-Stromversorgungsnetz angeschlossen werden kann. Der Anschluss des Datenendgrätes ans Niederspannungs-Stromversorgungsnetz erfolgt jedoch nicht direkt, sondern es wird über seinen Netzanschluss mit dem Geräteanschluss einer ersten Kuppelvorrichtung verbunden. Diese ist ihrerseits über ihren Netzanschluss an das Niederspannungs-Stromversorgungsnetz angeschlossen.

Der Nachrichtenanschluss des Datenendgerätes ermöglicht das Versenden der vom Datenendgerät generierten Nachrichten und/oder das Empfangen der für dieses Datenendgerät bestimmten Nachrichten. Mit seinem Nachrichtenanschluss ist das Datenendgerät über eine Datenverbindung mit dem Daten/Netzanschluss der ersten oder einer zweiten Kuppelvorrichtung verbunden. Auch die allenfalls zweite Kuppelvorrichtung ist über ihren Netzanschluss an das Niederspannungs-Stromversorgungsnetz angeschlossen.

In einer bevorzugten Ausführungsform der erfindungsgemässen Anordnung ist das erste Datenendgerät über seinen Netzanschluss sowie auch über die Datenverbindung mit der gleichen, nämlich der ersten Kuppelvorrichtung verbunden: der Netzanschluss des Datenendgerätes mit dem Geräteanschluss und der Nachrichtenanschluss über die Datenverbindung mit dem Daten/Netzanschluss.

Um die zu versendenden Nachrichten in eine für die Übertragung über das Niederspannungs-Stromversorgungsnetz geeignete Form zu bringen, ist in der Datenverbindung bevorzugt eine Sende/Empfangsvorrichtung vorgesehen. Diese weist einen Nachrichtenanschluss und einen Daten/Netzanschluss auf. Der Nachrichtenanschluss der Sende/Empfangsvorrichtung ist geeignet zum Senden bzw. Empfangen der Nachrichten und ist mit dem Nachrichtenanschluss des ersten Datenendgerätes verbunden. Der Daten/Netzanschluss der Sende/Empfangsvorrichtung ist mit dem Daten/Netzanschluss der ersten oder der allenfalls zweiten Kuppelvorrichtung verbunden, wobei die Sende/Empfangsvorrichtung über ihren Daten/Netzanschluss einerseits das energiereiche Versorgungssignal zugeführt erhält und andererseits auch ein diesem überlagertes, hochfrequentes Übertragungssignal versenden oder empfangen kann.

Ferner weist die Sende/Empfangsvorrichtung Mittel zum Generieren des Übertragungssignals aus den empfangenen Nachrichten bzw. Mittel zum Generieren der Nachrichten aus dem empfangenen Übertragungssignal auf.

Das Übertragungssignal wird in der Sende/Empfangsvorrichtung beispielsweise gebildet, indem die Nachrichten, d.h. die niederfrequenten Nachrichtensignale einem hochfrequenten Trägersignal aufmoduliert werden. Die Trägerfrequenz, d.h. die Frequenz des Trägersignals liegt dabei wesentlich höher als die Netzfrequenz des Niederspannungs-Stromversorgungsnetzes. Die Generierung bzw. Verarbeitung und Aufbereitung des Nachrichtensignals erfolgt typischerweise mit dem Datenendgerät, wobei dem Senden bzw. Empfangen natürlich auch eine Codierung oder weitere Bearbeitungsschritte vorausgehen bzw. folgen können.

Die erfindungsgemässe Anordnung befindet sich vorzugsweise innerhalb eines Gebäudes oder Gebäudekomplexes.

Im Folgenden wird die Kuppelvorrichtung, wie sie insbesondere in Anordnungen der eben beschriebenen Art verwendet werden kann, detaillierter erläutert. Sie ist kompakt aufgebaut, weist ein geringes Gewicht auf, ist daher einfach in andere Geräte zu integrieren, problemlos und rasch einzusetzen bzw. wieder zu entfernen und bietet somit eine einfache und kostengünstige Möglichkeit zur Ausführung der Erfindung.

Eine erfindungsgemässe Kuppelvorrichtung weist neben einem Netzanschluss zum Anschliessen an das Niederspannungs-Stromversorgungsnetz und einem Geräteanschluss zum Anschliessen eines mit elektrischer Energie zu versorgenden Gerätes an die Kuppelvorrichtung einen kombinierten Daten/Netzanschluss auf. Am Daten/Netzanschluss kann einerseits zwecks Energieversorgung ein weiteres Gerät angeschlossen werden und andererseits können über den Daten/Netzanschluss hochfrequente Nachrichtensignale von oder zu diesem Gerät in das oder aus dem Niederspannungs-Stromversorgungsnetz übertragen werden, indem sie dem niederfrequenten Versorgungssignal überlagert werden.

Der Netzanschluss der Kuppelvorrichtung umfasst mindestens zwei Netzkontakte. Diese dienen zum Anschliessen der Kuppelvorrichtung an ein Niederspannungs-Stromversorgungsnetz mit zumindest zwei Stromleitern, wobei unter dem Begriff Stromleiter sowohl ein Nullleiter als auch ein Phasenleiter, nicht aber ein Schutzleiter subsumiert wird. Die Kuppelvorrichtung kann mit ihrem Netzanschluss also an ein Niederspannungs-Stromversorgungsnetz mit einem Nullleiter und zumindest einem Phasenleiter angeschlossen werden.

Der Geräteanschluss der Kuppelvorrichtung umfasst gleichviele Gerätekontakte, wie Netzkontakte beim Netzanschluss vorhanden sind, d.h. einen für den Nullleiter und zumindest einen für den zumindest einen Phasenleiter. Zwischen je einem Netzkontakt und je einem Gerätekontakt ist eine Netzverbindung vorgesehen.

Der Daten/Netzanschluss der Kuppelvorrichtung weist zumindest zwei, höchstens aber gleich viele Daten/Netzkontakte auf wie Netzkontakte beim Netzanschluss vorhanden sind. Zwischen je einem Daten/Netzkcntakt und je einem Netzkontakt ist eine Daten/Netzverbindung vorgesehen.

Vorzugsweise weist die Kuppelvorrichtung genau zwei Netzkontakte und somit auch genau zwei Gerätekontakte auf.

Wie bereits erwähnt, erzeuger die meisten Geräte, welche an das Niederspannungs-Stromversorgungsnetz angeschlossen werden, hochfrequente Störsignale, welche sich einem hochfrequenten Übertragungssignal überlagern und die Datenübertragung negativ beeinflussen können. Das Datenendgerät bildet hier keine Ausnahme. Damit jedoch die Störsignale des Datenendgerätes nicht die Übertragung der eigenen Nachrichten stört, liegt in jeder Netzverbindung, d.h. zwischen jedem Netzanschluss und Geräteanschluss, eine Drosselspule. Diese Drosselspulen filtern hochfrequente Signalanteile aus den über die entsprechenden Leiter übertragenen Signalen heraus und halten auf diese Weise hochfrequente Störungen vom Stromversorgungsnetz fern.

Die Drosselspulen haben aber einen weiteren wichtigen Vorteil. Sie verhindern, dass Teile des hochfrequenten Übertragungssignals über den Geräteanschluss der Kuppelvorrichtung in das Datenendgerät gelangen. Sie sorgen somit dafür, dass einerseits keine hochfrequenten Signale als quasi Störsignale über den Stromversorgungsanschluss in das Datenendgerät und andererseits das Übertragungssignal mit kleinstmöglichem Energieverlust vom Niederspannungs-Stromversorgungsnetz zur Sende/Empfangsvorrichtung bzw. von der Sende/Empfangsvorrichtung ins Niederspannungs-Stromversorgungsnetz gelangen.

Eingesetzt wird die erfindungsgemässe Kuppelvorrichtung vorzugsweise in Niederspannungs-Stromversorgungsnetzen mit einer Netzfrequenz unter 1 kHz. Die Frequenz des Trägersignals, welchem die Nachrichten aufmoduliert werden, liegt zwischen 1 MHz und 60 MHz. Um bei solchen Bedingungen die unerwünschten Störungen optimal zu unterdrücken, weisen die Drosselspulen in den Netzleiterverbindungen vorzugsweise je eine Induktivität zwischen 1 µH und 20 µH auf. Der Einsatz von Drosselspulen ist platzsparend und vermeidet Sättigungseffekte.

In einer bevorzugten Ausführungsform der Kuppelvorrichtung ist sie zum Anschliessen an ein Niederspannungs-Stromversorgungsnetz mit einem Schutzleiter, beispielsweies einem Erdleiter ausgebildet. Ihr Netzanschluss weist daher einen Erdleiter-Netzkontakt und ihr Geräteanschluss einen Erdleiter-Gerätekontakt auf. Der Erdleiter-Netzkontakt ist mit dem Erdleiter-Gerätekontakt durch eine Erdleiter-Netzverbindung verbunden.

Weist die Kuppelvorrichtung wie eben beschrieben Kontakte und Verbindungen für einen Erdleiter auf, wird bei einer weiteren Ausführungsform der Erfindung bevorzugt auch der Daten/Netzanschluss der Kuppelvorrichtung mit einem Kontakt für den Erdleiter, d.h. einem Erdleiter-Daten/Netzkontakt ausgestattet. In diesem Fall wird der Erdleiter-Netzkontakt mit dem Erdleiter-Daten/Netzkontakt durch eine Erdleiter-Daten/Netzverbindung verbunden.

Der Netzanschluss der Kuppelvorrichtung ist vorzugsweise als Stecker, d.h. als Netzstecker mit Stiften ausgebildet. Er umfasst einen Kontaktstift für jeden Netzkontakt sowie einen zusätzlichen Kontaktstift für einen allenfalls vorhandenen Erdleiter-Netzkontakt. Dieser Netzstecker ist derart ausgebildet und erfüllt die entsprechenden Normen, dass er in eine entsprechend ausgebildete und normierte Netzsteckdose des Niederspannungs-Stromversorgungsnetzes eingesteckt werden kann.

Damit die Kuppelvorrichtung möglichst einfach eingesetzt und gehandhabt werden kann, ist ihr Geräteanschluss mit Vorteil als Steckdose mit Buchsen ausgebildet. Er umfasst eine Kontaktbuchse für jeden Gerätekontakt sowie eine zusätzliche Kontaktbuchse für einen allenfalls vorhandenen Erdleiter-Gerätekontakt. Diese Steckdose ist derart ausgebildet und erfüllt die entsprechenden Normen, dass ein entsprechend ausgebildeter oder normierter Gerätenetzstecker eines mit elektrischer Energie zu versorgenden Gerätes darin eingesteckt werden kann.

Auf diese Weise ist gewährleistet, dass beliebige Geräte, welche mit einem passenden Gerätenetzstecker direkt an das Niederspannungs-Stromversorgungsnetz angeschlossen werden können, auch indirekt über eine Kuppelvorrichtung daran angeschlossen werden können. Der Gerätenetzstecker des Gerätes wird einfach aus der Netzsteckdose herausgezogen und in die Steckdose des Geräteanschlusses der Kuppelvorrichtung eingesteckt. Die Kuppelvorrichtung wird danach einfach mit ihrem als Netzstecker ausgebildeten Netzanschluss in diese Netzsteckdose eingesteckt.

Bei einer besonders bevorzugten Ausführungsform der Erfindung sind der Netzanschluss und der Geräteanschluss in einem gemeinsamen Gehäuse untergebracht und der Daten/Netzanschluss befindet sich am Ende eines aus diesem Gehäuse herausgeführten Daten/Netzkabels. Die Adern dieses Daten/Netzkabels sind im Gehäuse mit den entsprechenden Kontakten des Netzanschlusses verbunden und bilden die Daten/Netzverbindungen sowie die Erdleiter-Daten/Netzverbindung, falls der Daten/Netzanschluss auch einen Erdleiter-Daten/Netzkontakt aufweist. Der Daten/Netzanschluss kann sowohl als Stecker oder als Steckdose ausgebildet sein, oder er ist direkt mit den entsprechenden Anschlüssen des daran angeschlossenen Gerätes verbunden. Hierbei ist zu beachten, dass es technisch zwar möglich ist, den Daten/Netzanschluss als Stecker zu realisieren, dass es hinsichtlich der Sicherheit jedoch nicht sinnvoll und je nach gesetzlichen Vorschriften sogar verboten ist, Stromanschlüsse als Kontaktstifte eines Steckers auszubilden, wenn sie in nicht eingestecktem Zustand unter Spannung stehen können.

Um beim Einstecken der Kuppelvorrichtung in eine Netzsteckdose einerseits sowie eines Gerätenetzsteckers in die Steckdose des Geräteanschlusses andererseits möglichst geringe Querkräfte, d.h. Kräfte, welche quer zur Einsteckrichtung der Kuppelvorrichtung in das Niederspannungs-Stromversorgungsnetz wirken, hervorzurufen, sind der Netzanschluss und der Geräteanschluss beispielsweise in einer Linie angeordnet. Die beiden Geraden, welche durch die Verlängerung eines Kontaktstiftes bzw. der entsprechenden Kontaktbuchse gebildet werden, sind demzufolge nicht nur parallel, sondern sie liegen sogar übereinander, sind also quasi identisch.

Das Daten/Netzkabel des Daten/Netzanschlusses ist bei dieser Anordnung von Netz- und Geräteanschluss z.B. seitlich aus dem Gehäuse herausgeführt.

Bei einer weiteren bevorzugten Ausführungsform der Erfindung ist der Daten/Netzanschluss ebenfalls als Steckdose mit Buchsen ausgebildet. Er umfasst eine Kontaktbuchse für jeden Daten/Netzkontakt sowie eine zusätzliche Kontaktbuchse für einen allenfalls vorhandenen Erdleiter-Daten/Netzkontakt. Diese Steckdose ist derart ausgebildet und erfüllt die entsprechenden Normen, dass ein entsprechend ausgebildeter oder normierter Gerätenetzstecker eines mit elektrischer Energie zu versorgenden Gerätes darin eingesteckt werden kann.

Um eine derart ausgebildete Kuppelvorrichtung kompakt und handlich zu realisieren, wird sie vorzugsweise in ein formstabiles Gehäuse eingesetzt. Dieses weist geeignete Öffnungen für den Netzstecker des Netzanschlusses, für die Steckdose des Geräteanschlusses sowie für die Steckdose des Daten/Netzanschlusses auf. Dabei sind die Öffnungen derart angeordnet bzw. das Gehäuse derart ausgebildet, dass die Kuppelvorrichtung mit ihrem Netzanschluss in eine Netzsteckdose des Niederspannungs-Stromversorgungsnetzes, der Gerätenetzstecker eines mit Strom zu versorgenden Gerätes in den Netzanschluss der Kuppelvorrichtung und gleichzeitg der Gerätenetzstecker eines weiteren, mit Strom zu versorgenden Gerätes in den Daten/Netzanschluss der Kuppelvorrichtung eingesteckt werden kann. Zwischen den Öffnungen ist also genug Platz vorhanden, sodass sich die Stecker bzw. Steckdosen nicht gegenseitig in die Quere kommen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung der erfindungsgemässen Kuppelvorrichtung;
- Fig. 2: eine schematische Darstellung einer erfindungsgemässen Anordnung zur Übermittlung von Nachrichten;
- Fig. 3: eine schematische Darstellung einer Kuppelvorrichtung mit zwei Kuppelsteckdosen und
- Fig. 4: eine schematische Darstellung einer in einem Modem integrierten Kuppelvorrichtung.

Grundsätzlich sind in den Figuren gleiche Teile mit gleichen Bezugszeichen versehen.

### Wege zur Ausführung der Erfindung

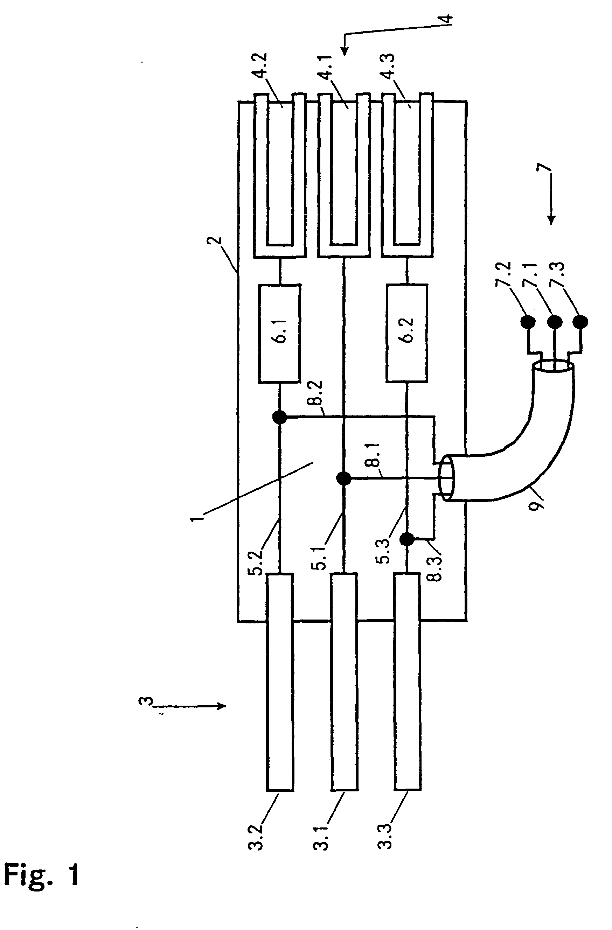

In Figur 1 ist schematisch eine erfindungsgemässe Kuppelvorrichtung 1 dargestellt. Sie weist als Netzanschluss an einem Ende einen Kuppelnetzstecker 3 auf, welcher zum Einstecken in eine Netzsteckdose des betreffenden Niederspannungs-Stromversorgungsnetzes ausgebildet ist. Am gegenüberliegenden Ende der Kuppelvorrichtung 1 ist als Geräteanschluss eine Kuppelsteckdose 4 ausgebildet, welche kompatibel zum Kuppelnetzstecker 3 ist und damit physikalisch einer Netzsteckdose entspricht. D.h., dass ein beliebiges Gerät, welches einen Gerätenetzstecker besitzt, der zum Anschliessen des Gerätes an das betreffende Stromversorgungsnetz ausgebildet ist, auch durch Einstecken des Gerätenetzsteckers in die Kuppelsteckdose 4 an die Kuppelvorrichtung 1 angeschlossen werden kann. Kuppelnetzstecker 3 und Kuppelsteckdose 4 sind in einem gemeinsamen Gehäuse 2 untergebracht.

Der Kuppelnetzstecker 3 weist drei Kontaktstifte, einen Erdleiter-Kontaktstift 3.1, einen Nullleiter-Kontaktstift 3.2 und einen Phasenleiter-Kontaktstift 3.3 auf. Die Kuppelsteckdose 4 weist eine Erdleiter-Kontaktbuchse 4.1, eine Nullleiter-Kontaktbuchse 4.2 und eine Phasenleiter-Kontaktbuchse 4.3 auf. Zwischen dem Erdleiter-Kontaktstift 3.1 und der Erdleiter-Kontaktbuchse 4.1, zwischen dem Nullleiter-Kontaktstift 3.2 und der Nullleiter-Kontaktbuchse 4.2 sowie zwischen dem Phasenleiter-Kontaktstift 3.3 und der Phasenleiter-Kontaktbuchse 4.3 besteht je eine Leiterverbindung 5.1, 5.2 bzw. 5.3. In den beiden Leiterverbindungen 5.2 und 5.3 liegt je eine Drosselspule 6.1 bzw. 6.2.

Die Kuppelvorrichtung 1 weist im Weiteren einen Daten/Netzanschluss 7 mit einem Erdleiter-Kontaktanschluss 7.1, einem Nullleiter-Kontaktanschluss 7.2 und einem Phasenleiter-Kontaktanschluss 7.3 auf. Der Daten/Netzanschluss befindet sich am Ende eines aus dem Gehäuse 2 herausgeführten Daten/Netzkabels 9. Zwischen dem Erdleiter-Kontaktstift 3.1 und dem Erdleiter-Kontaktanschluss 7.1, zwischen dem Nullleiter-Kontaktstift 3.2 und dem Nullleiter-Kontaktanschluss 7.2 sowie zwischen dem Phasenleiter-Kontaktstift 3.3 und dem Phasenleiter-Kontaktanschluss 7.3 besteht je eine Leiterverbindung 8.1, 8.2 bzw. 8.3.

Dank der Beschränkung auf Drosselsputen - auf Kapazitäten wird verzichtet - kann eine Kuppelvorrichtung nicht nur billig hergestellt werden, sondern auch sehr kompakt aufgebaut sein. Insbesondere kann eine grosse Baulänge, die wegen des grösseren Hebels allfällig einwirkender Kräfte die Gefahr des Abbrechens des Zwischenstücks oder auch der Beschädigung oder des Herausreissens von Netzsteckdosen stark erhöhen würde, vermieden werden.

Selbstverständlich kann aber auch der Daten/Netzanschluss der Kuppelvorrichtung 1 als Steckdose mit Kontaktbuchsen oder als Stecker mit Kontaktstiften ausgeführt sein, wobei jedoch die Ausführungen weiter vorne bezüglich Sicherheit und gesetzlichen Vorschriften zu berücksichtigen sind.

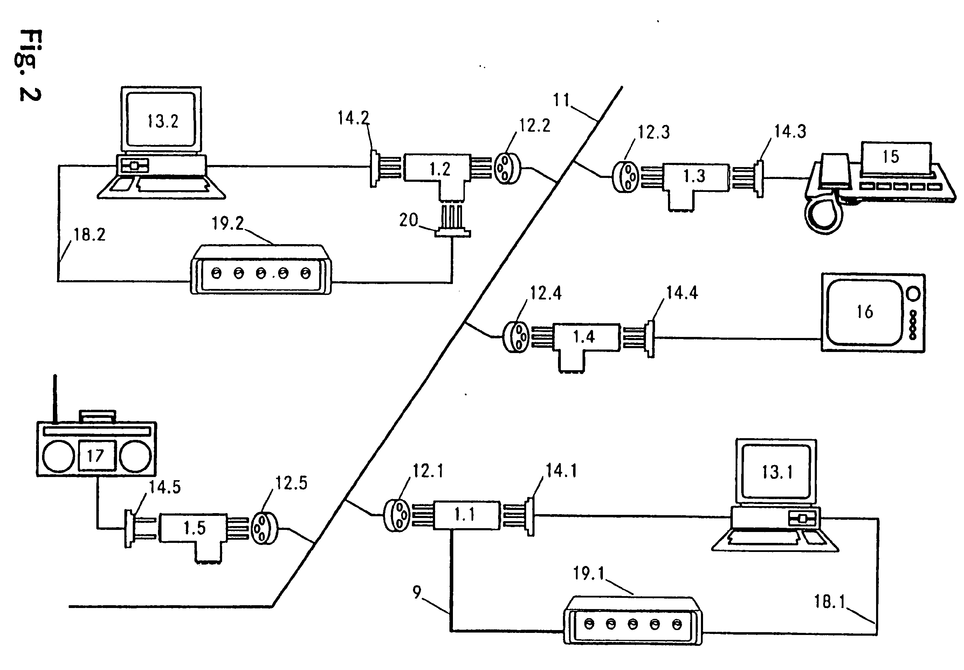

In Figur 2 ist eine schematische Anordnung zur Übermittlung von Nachrichten - es kann sich dabei um Telefongespräche, Telekopien, digitale Daten, um beliebige Audio- oder Videosignale oder anderes handeln - über ein Niederspannungs-Stromversorgungsnetz 11, das vorzugsweise innerhalb eines öffentlichen oder privaten Gebäudes oder Gebäudekomplexes liegt, dargestellt. Das Niederspannungs-Stromversorgungsnetz 11 weist eine Mehrzahl von Netzsteckdosen 12.1 bis 12.5 auf. In die Netzsteckdosen 12.1 bis 12.5 ist mit ihrem Kuppelnetzstecker jeweils eine Kuppelvorrichtung 1.1 bis 1.5 eingesteckt. Der Übersicht halber sind sämtliche Stecker und zugehörige Steckdosen so gezeichnet, als ob der Stecker nicht in die Steckdose eingesteckt wäre. (Dies gilt für alle Figuren.)

Die Nachrichten werden zwischen den beiden Computern 13.1 und 13.2, die durch Einstecken ihrer Netzstecker 14.1 bzw. 14.2 in die Kuppelsteckdose der Kuppelvorrichtungen 1.1 bzw. 1.2 an das Niederspannungs-Stromversorgungsnetz 11 angeschlossen sind, über das Niederspannungs-Stromversorgungsnetz 11 übertragen. Dabei wird eine weit über der Netzfrequenz liegende Trägerfrequenz, die vorzugsweise zwischen 1 MHz und 60 MHz, vorzugsweise bei mindestens 10 MHz liegt, verwendet.

Am gleichen Niederspannungs-Stromversorgungsnetz 11 sind durch Einstecken des jeweiligen Netzsteckers 14.3, 14.4 bzw. 14.5 in die Kuppelsteckdosen der Kuppelvorrichtungen 1.3, 1.4, resp. 1.5 weitere Stromverbraucher angeschlossen: Ein Faxgerät 15, ein Fernseher 16 sowie ein Tonbandgerät 17. Es ist zu beachten, dass der Netzstecker 14.5 des Tonbandgerätes 17 nur zweipolig ist, also nur einen Nullleiter und einen Phasenleiter, aber keinen Erdleiter aufweist. Solche Geräte können selbstverständlich ebenfalls über eine erfindungsgemässe Kuppelvorrichtung an das Niederspannungs-Stromversorgungsnetz 11 angeschlossen werden.

In den Verbrauchern (ob ein- oder ausgeschaltet) oder in den Leitungsabschnitten zwischen den Verbrauchern und den Netzsteckdosen bzw. Kuppelvorrichtungen werden Störungen mit hochfrequenten Anteilen erzeugt.

Um die von den Computern 13.1 oder 13.2 generierten Nachrichten übermitteln zu können, sind beide über eine entsprechende Signalverbindung 18.1 bzw. 18.2 mit jeweils einem Modem 19.1 bzw. 19.2 verbunden. Die Modems 19.1, 19.2 wiederum besitzen je einen Daten/Netzanschluss. Beim Modem 19.2 ist dieser ausgeführt als Datennetzstecker 20. Beim Modem 19.1 ist er realisiert durch Anschlusskontakte, welche sich innerhalb des Modems befinden. Die Kuppelvorrichtung 1.1 ist realisiert gemäss Figur 1. Ihre Daten/Netzkontakte befinden sich am Ende des Daten/Netzkabels 9 und sind direkt mit den entsprechenden Anschlusskontakten des Daten/Netzanschlusses des Modems 19.1 verbunden.

Der Daten/Netzanschluss der Kuppelvorrichtungen 1.2 bis 1.5 ist realisiert als Steckdose, in die ein zum Anschluss ans Niederspannungs-Stromversorgungsnetz 11 ausgebildeter Netzstecker eingesteckt werden kann. Der Datennetzstecker 20 ist somit als Netzstecker realisiert, die in eine beliebige Netzsteckdose 12.1 bis 12.5 des Niederspannungs-Stromversorgungsnetzes 11 eingesteckt werden kann. Er ist in den als Steckdose ausgeführten Daten/Netzanschluss der Kuppelvorrichtung 1.2 eingesteckt. Der Daten/Netzanschluss der Modems 19.1, 19.2 dient diesen einerseits zur Stromversorgung und gleichzeitig zum Empfangen bzw. Versenden der über das Niederspannungs-Stromversorgungsnetz 11 übermittelten Nachrichten.

Würden die in den Verbrauchern und in den Kabeln erzeugten hochfrequenten Störungen ein Modem 19.1 oder 19.2 im Wesentlichen ungedämpft erreichen, könnten sie dort nur mit schaltungstechnisch sehr aufwendigen Massnahmen oder gar nicht unterdrückt werden. Dies würde den Empfang von Nachrichten, denen sie sich überlagern, empfindlich stören.

Aus diesem Grund sind die Geräte, die als Quellen von Störsignalen, insbesondere solchen, die im erwähnten für den Nachrichtenaustausch bevorzugten Bereich zwischen 1 MHz und 60 MHz liegen in Frage kommen, jeweils über eine erfindungsgemässe Kuppelvorrichtung 1.1 bis 1.5 an das Niederspannungs-Stromversorgungsnetz 11 angeschlossen. Die von den besagten Geräten ausgehenden hochfrequenten Störsignale werden durch die Drosselspulen in den Kuppelvorrichtungen 1.1 bis 1.5 praktisch vollständig unterdrückt, so dass sie den Nachrichtenempfang durch die Modems 19.1 bzw. 19.2 nicht stören.

Durch die Verwendung der erfindungsgemässen Kuppelvorrichtungen 1.3 bis 1.5 zum Anschliessen weiterer Nutzgeräte steht zudem jeweils ein zusätzlicher Netzzugang zum Anschliessen eines Modems zwecks Datenübertragung zur Verfügung. Es könnte z.B. der Fernseher 16 zum Abrufen von Internetseiten mit einem weiteren Modem ausgestattet werden, welches am Daten/Netzausgang der Kuppelvorrichtung 1.4 angeschlossen werden könnte.

Weiter haben die Drosselspulen in den Kuppelvorrichtungen 1.1 bis 1.5 den Vorteil, dass sie das modulierte, hochfrequente Trägersignal von den nachfolgenden Computern 13.1 bzw. 13.2 fernhalten. Damit steht die gesamte Signalenergie zur Übertragung über das Niederspannungs-Stromversorgungsnetz zur Verfügung.

Die Kuppelvorrichtungen 1.1 bis 1.5 haben ausserdem die Wirkung, das Kabel zwischen dem Netzstecker und dem jeweiligen Gerät, das vor allem bei ungünstiger Länge einen offenen Leitungsabschluss darstellt und auch bei abgeschaltetem Gerät empfindliche Störungen verursachen kann, für Signale höherer Frequenz praktisch abzukoppeln. Dadurch werden Reflexionen unterbunden und die Summe der Störsignale auf dem Niederspannungs-Stromversorgungsnetz 11 weiter und u.U. sehr wesentlich reduziert.

Durch die Reduktion der Störungen kann die Datenübertragungsrate beträchtlich erhöht werden. Ausserdem kann die Stärke des Trägersignals reduziert werden, so dass gesetzliche Beschränkungen für den Gesamtpegel hochfrequenter Signale auf dem Niederspannungs-Stromversorgungsnetz 11 wesentlich leichter eingehalten werden können.

Im Rahmen der Erfindung sind verschiedene Abwandlungen der Kuppelvorrichtung 1 möglich. So kann sie z.B. als Verteiler mit mehreren Kuppelsteckdosen und/oder mehreren Daten/Netzanschlüssen ausgebildet sein.

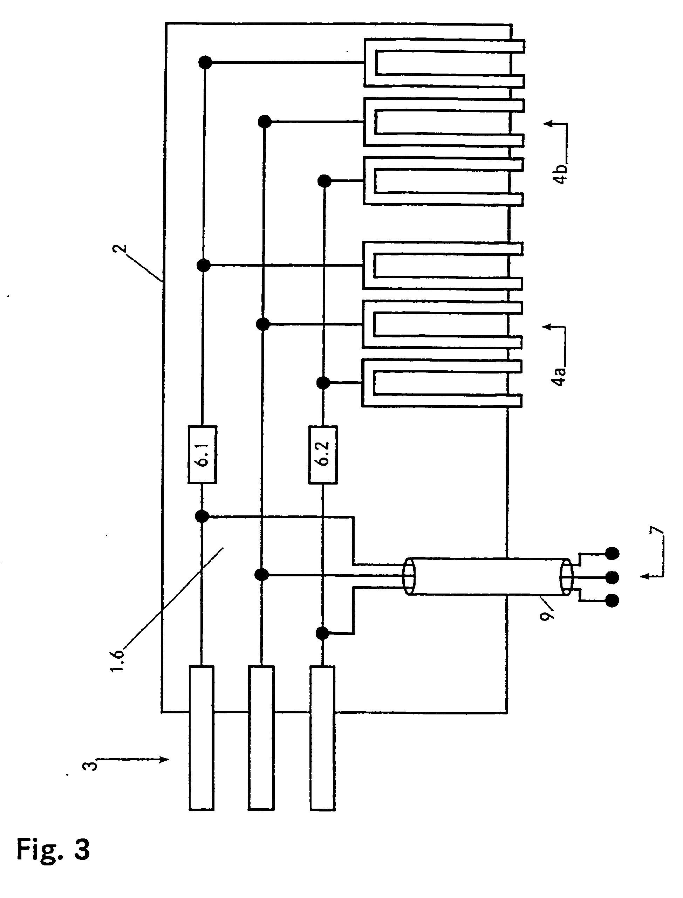

In Figur 3 ist beispielsweise eine Kuppelvorrichtung 1.6 dargestellt, welche einen Kuppelnetzstecker 3, einen Daten/Netzanschluss 7 sowie zwei Kuppelsteckdosen 4a und 4b aufweist. Der Kuppeinetzstecker (3) und die beiden Kuppelsteckdosen 4a und 4b sind in einem gemeinsamen Gehäuse 2 untergebracht und der Daten/Netzanschluss befindet sich wiederum am Ende eines aus dem Gehäuse 2 herausgeführten Daten/Netzkabeis 9. Die Kontaktbuchsen der Kuppelstecker 4a und 4b sind analog der Kuppelvorrichtung aus Figur 1 mit den Kontaktstiften des Kuppelnetzsteckers 3 verbunden. Das Herausfiltern der über die beiden Kuppelsteckdosen 4a und 4b eingeführten Störungen erfolgt für beide Kuppelsteckdosen 4a und 4b gemeinsam durch die beiden Drosselspulen 6.1 und 6.2. Es wäre aber auch möglich, für jede vorhandene Kuppelsteckdose 4a bzw. 4b jeweils eigene Drosselspulen vorzusehen.

Ähnlich wie beim Daten/Netzanschluss einer Kuppelvorrichtung müssen auch die Netzanschlüsse nicht zwingend als in ein Gehäuse integrierte Stecker oder Steckdosen ausgeführt sein. Es ist beispielsweise möglich, dass ein Anschluss als Stecker oder Steckdose am Ende eines entsprechenden Anschlusskabels vorgesehen ist, dessen Drähte ihrerseits mit den jeweiligen Kontakten der Kuppelvorrichtung verbunden sind oder dass ein Anschluss überhaupt nicht als Stecker oder Steckdose ausgebildet, sondern fest mit den entsprechenden Kontakten des Gegenstücks verbunden ist. Auch hierbei sind jedoch die obigen Ausführungen bezüglich technischer Realisierbarkeit und gesetzlicher Vorschriften zu berücksichtigen.

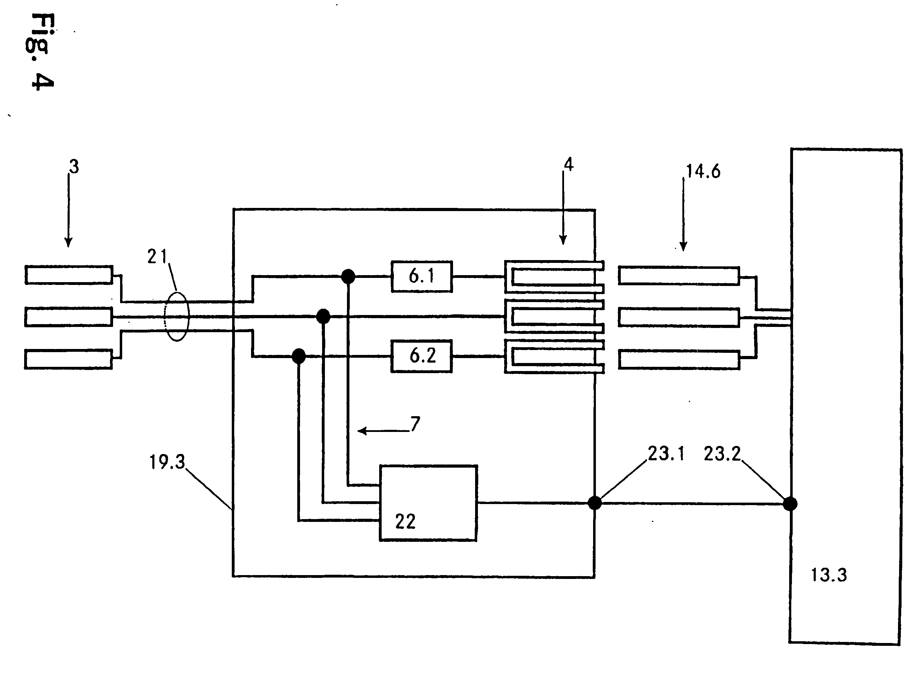

Figur. 4 zeigt z.B. eine Kuppelvorrichtung, die teilweise in ein Modem 19.3 integriert ist. Der Kuppelnetzstecker 3 befindet sich am Ende eines entsprechenden Anschlusskabels 21, das direkt in das Modem 19.3 hineingeführt ist. Die Daten/Netzkontakte des Daten/Netzanschlusses sind direkt mit den entsprechenden Kontakten des Sende/Empfangsteils 22 des Modems 19.3 verbunden. Dieses weist weiter einen Signalanschluss 23.1 auf. Die Kuppelsteckdose 4 bildet gegenüber einem herkömmlichen Modem einen zusätzlichen Ausgang dieses Modems 19.3. An der Kuppelsteckdose 4 können wiederum beliebige, mit einem entsprechenden Netzstecker ausgestattete Stromverbraucher angeschlossen werden. Dargestellt ist ein Computer 13.3, dessen Netzstecker 14.6 sich am Ende eines Netzkabels befindet und in die Kuppelsteckdose 4 eingesteckt ist und der zur Übertragung von Nachrichten vom oder zum Modem 19.3 einen Signalanschluss 23.2 aufweist, welcher mit dem Signalanschluss 23.1 des Modems 19.3 verbunden ist. Die Filterung der durch den Computer 13.3 erzeugten hochfrequenten Störungen erfolgt mittels der Drosselspulen 6.1 und 6.2 der Kuppelvorrichtung, welche sich im Modem 19.3 befinden.

Anstatt die Kuppelvorrichtung oder Teile davon in ein Modem oder beispielsweise einen Computer zu integrieren, können natürlich auch das Modem oder ein anderes Sende/Empfangsgerät sowie weitere Datenverarbeitungsmodule in das Gehäuse der Kuppelvorrichtung integriert werden.

Schliesslich kann die Kuppelvorrichtung auch als Verlängerungskabel ausgebildet sein, wobei der Kuppelnetzstecker einerseits und die Kuppelsteckdose oder auch mehrere Kuppelsteckdosen andererseits in zwei durch ein Kabel verbundenen Gehäuseteilen angeordnet sind, wobei der Daten/Netzanschluss in einem beliebigen Gehäuseteil vorgesehen werden kann. Die Drosselspulen sind dann in einem der beiden Gehäuseteile oder zwischen beiden verteilt, immer aber derart untergebracht, dass die Drosselspulen nicht zwischen dem oder den Daten/Netzanschlüssen und dem Kuppelnetzstecker liegen.

Die in Figur 1 dargestellte und geschilderte einteilige Ausführung wird jedoch wegen ihres besonders kompakten Aufbaus und der - insbesondere wenn die Kuppelvorrichtung jeweils direkt in die Netzsteckdose eingesteckt wird - Einfachheit und Übersichtlichkeit ihres Einsatzes bevorzugt.

Natürlich ist die Erfindung auch bei Niederspannungs-Stromversorgungsnetzen anderer Norm, z.B. mit drei Phasenleitern oder einem Niederspannungs-Stromversorgungsnetz ohne Erdleiter analog einsetzbar.

Zusammenfassend ist festzustellen, dass es die Erfindung erlaubt, Nachrichten über ein Niederspannungs-Stromversorgungsnetz zu übermitteln, wobei hochfrequente Störungen, welche von beliebigen Stromverbrauchern erzeugt werden, vom Stromversorgungsnetz ferngehalten werden, indem zwischen jeden Stromverbraucher und das Niederspannungs-Stromversorgungsnetz eine Kuppelvorrichtung eingesetzt wird, die die erwähnten Störungen mittels Drosselspulen unterdrückt. Zudem ermöglicht es die Erfindung, ein- und dieselbe Netzsteckdose einerseits für das Empfangen der Daten aus dem Niederspannungs-Stromversorgungsnetz und andererseits gleichzeitig für die Stromversorgung derjenigen Geräte zu benutzen, mit denen die übertragenen oder die zu übertragenden Nachrichten verarbeitet werden.

## Patentansprüche

1. Anordnung zur Übermittlung von Nachrichten über ein Niederspannungs-Stromversorgungsnetz (11), umfassend ein erstes und ein zweites Datenendgerät (13.2, 13.1), **dadurch gekennzeichnet, dass** das erste Datenendgerät (13.2) über zumindest eine Kuppelvorrichtung (1, 1.2), welche neben einem Netzanschluss (3) und einem Geräteanschluss (4) einen Daten/Netzanschluss (7) aufweist, an das Niederspannungs-Stromversorgungsnetz (11) angeschlossen ist.

2. Anordnung nach Anspruch 1, **dadurch gekennzeichnet, dass** das erste Datenendgerät einen Nachrichtenanschluss zum Versenden und/oder Empfangen der Nachrichten sowie einen Netzanschluss zum Anschliessen an das Niederspannungs-Stromversorgungsnetz aufweist und über seinen Netzanschluss mit dem Geräteanschluss der zumindest einen Kuppelvorrichtung, mit seinem Nachrichtenanschluss über eine Datenverbindung mit dem Daten/Netzanschluss der zumindest einen oder einer zweiten Kuppelvorrichtung, und die zumindest eine sowie die allenfalls zweite Kuppelvorrichtung über ihren Netzanschluss mit dem Niederspannungs-Stromversorgungsnetz verbunden ist.

3. Anordnung nach Anspruch 2, **dadurch gekennzeichnet, dass** das erste Datenendgerät über seinen Netzanschluss mit dem Geräteanschluss und über die Datenverbindung mit dem Daten/Netzanschluss der zumindest einen Kuppelvorrichtung verbunden ist.

4. Anordnung nach Anspruch 2 oder 3, **dadurch gekennzeichnet, dass** in der Datenverbindung eine Sende/Empfangsvorrichtung mit einem Nachricittenanschluss zum Senden bzw. Empfangen der Nachrichten, einem Daten/Netzanschluss zum Senden bzw. Empfangen eines hochfrequenten Übertragungssignals sowie Mitteln zum Generieren des Übertragungssignals aus den Nachrichten bzw. zum Generieren der Nachrichten aus dem Übertragungssignal vorgesehen ist, wobei die Sende/Empfangsvorrichtung über ihren Nachrichtenanschluss mit dem Nachrichtenanschluss des ersten Datenendgerätes und über ihren Daten/Netzanschluss mit dem Daten/Netzanschluss der zumindest einen oder der allenfalls zweiten Kuppelvarrichtung verbunden ist.

5. Anordnung nach einem der Ansprüche 1 bis 4, **dadurch gekennzeichnet, dass** sich die Anordnung innerhalb eines Gebäudes oder Gebäudekomplexes befindet.

6. Kuppelvorrichtung (1, 1.2), insbesondere für eine Anordnung nach einem der Ansprüche 1 bis 5, **dadurch gekennzeichnet, dass** sie neben einem Netzanschluss (3) zum Anschliessen an ein Niederspannungs-Stromversorgungsnetz (11) und einem Geräteanschluss (4) zum Anschliessen eines mit elektrischer Energie zu versorgenden Gerätes (13.1, 13.2) einen Daten/Netzanschluss (7) zum Anschliessen eines weiteren mit elektrischer Energie zu versorgenden Gerätes (19.2) sowie zur Übertragung hochfrequenter Nachrichtensignale aufweist.

7. Kuppelvorrichtung nach Anspruch 6, **dadurch gekennzeichnet, dass** der Netzanschluss zumindest zwei Netzkontakte zum Anschliessen an ein Niederspannungs-Stromversorgungsnetz mit zumindest zwei Stromleitern, d.h. einem Nullleiter und zumindest einem Phasenleiter, der Geräteanschluss eine der Anzahl Netzkontakte entsprechende Anzahl Gerätekontakte zum Anschliessen eines mit elektrischer Energie zu versorgenden Gerätes und der Daten/Netzanschluss zumindest zwei und höchstens eine der Anzahl Netzkontakte entsprechende Anzahl Daten/Netzkontakte aufweist, wobei zwischen je einem Netzkontakt und je einem Gerätekontakt eine Netzverbindung sowie zwischen je einem Daten/Netzkontakt und je einem Netzkontakt eine Daten/Netzverbindung vorgesehen ist.

8. Kuppelvorrichtung nach Anspruch 7, **dadurch gekennzeichnet, dass** sie zwei Netzkontakte und zwei Gerätekontakte aufweist.

9. Kuppelvorrichtung nach Anspruch 7 oder 8, **dadurch gekennzeichnet, dass** in jeder Netzverbindung eine Drosselspule liegt.

10. Kuppelvorrichtung nach Anspruch 9, **dadurch gekennzeichnet, dass** die Drosselspulen je eine Induktivität zwischen 1 µH und 20 µH aufweisen.

11. Kuppelvorrichtung nach einem der Ansprüche 6 bis 10, **dadurch gekennzeichnet, dass** der Netzanschluss einen Erdleiter-Netzkontakt und der Geräteanschluss einen Erdleiter-Gerätekontakt aufweist, welche miteinander durch eine Erdleiter-Netzverbindung verbunden sind.

12. Kuppelvorrichtung nach Anspruch 11, **dadurch gekennzeichnet, dass** der Daten/Netzanschluss einen Erdleiter-Daten/Netzkontakt aufweist, welcher mit dem Erdleiter-Netzkontakt durch eine Erdleiter-Daten/Netzverbindung verbunden ist.

13. Kuppelvorrichtung nach einem der Ansprüche 6 bis 12, **dadurch gekennzeichnet, dass** der Netzanschluss als Netzstecker mit Kontaktstiften zum Einstecken in eine Netzsteckdose des Niederspannungs-Stromversorgungsnetz ausgebildet ist.

14. Kuppelvorrichtung nach einem der Ansprüche 6 bis 13, **dadurch gekennzeichnet, dass** der Geräteanschluss als Steckdose mit Kontaktbuchsen zum Einstecken eines Netzsteckers eines mit elektrischer Energie zu versorgenden Gerätes ausgebildet ist.

15. Kuppelvorrichtung nach einem der Ansprüche 6 bis 14, **dadurch gekennzeichnet, dass** der Netzanschluss und der Geräteanschluss in einem gemeinsamen Gehäuse untergebracht sind und sich der Daten/Netzanschluss am Ende eines aus dem Gehäuse herausgeführten Daten/Netzkabels befindet.

16. Kuppelvorrichtung nach einem der Ansprüche 6 bis 14, **dadurch gekennzeichnet, dass** der Daten/Netzanschluss als Steckdose mit Kontaktbuchsen zum Einstecken eines Netzsteckers eines mit elektrischer Energie zu versorgenden Gerätes ausgebildet und die Kuppelvorrichtung in ein formstabiles Gehäuse eingesetzt ist, wobei das Gehäuse derart ausgebildet ist, dass die Kuppelvorrichtung mit ihrem Netzanschluss an das Niederspannungs-Stromversorgungsnetz, ein erstes mit Strom zu versorgendes Gerät an den Geräteanschluss der Kuppelvorrichtung und ein zweites mit Strom zu versorgendes Gerät an den Daten/Netzanschluss der Kuppelvorrichtung angeschlossen werden kann.

## Claims

1. Arrangement for transmitting information via a low-voltage electrical power supply network (11), comprising a first and a second data terminal (13.2, 13.1), **characterised in that** the first data terminal (13.2) is connected to the low-voltage electrical power supply network (11) via at least one coupling device (1, 1.2) which has a data/network connection (7) in addition to a network connection (3) and a device connection (4).

2. Arrangement according to claim 1, **characterised in that** the first data terminal has an information connection for sending and/or receiving the information and a network connection for connection to the low-voltage electrical power supply network, and is connected via its network connection to the device connection of the at least one coupling device, by means of its information connection via a data connection to the data/network connection of the at least one or a second coupling device, and the at least one and, if applicable, the second coupling device is connected to the low-voltage electrical power supply network via its network connection.

3. Arrangement according to claim 2, **characterised in that** the first data terminal is connected to the device connection via its network connection and to the data/network connection of the at least one coupling device via the data connection.

4. Arrangement according to claim 2 or 3, **characterised in that** there is provided, in the data connection, a sending/receiving device having an information connection for sending and/or receiving the information, a data/network connection for sending and/or receiving a high-frequency transmission signal and means for generating the transmission signal from the information or for generating the information from the transmission signal, the sending/receiving device being connected via its information connection to the information connection of the first data terminal and being connected via its data/network connection to the data/network connection of the at least one or, if applicable, the second coupling device.

5. Arrangement according to any one of claims 1 to 4, **characterised in that** the arrangement is located inside a building or complex of buildings.

6. Coupling device (1, 1.2), in particular for an arrangement according to any one of claims 1 to 5, **characterised in that**, in addition to a network connection (3) for connection to a low-voltage electrical power supply network (11) and a device connection (4) for connecting a device (13.1, 13.2) to be supplied with electrical energy, it has a data/network connection (7) for connecting a further device (19.2) to be supplied with electrical energy and for transmitting high-frequency information signals.

7. Coupling device according to claim 6, **characterised in that** the network connection has at least two network contacts for connection to a low-voltage electrical power supply network having at least two electrical conductors, that is to say, a directly earthed conductor and at least one phase conductor, the device connection has a number of device contacts corresponding to the number of network contacts in order to connect a device to be supplied with electrical energy, and the data/network connection has at least two and, at the maximum, a number of data/network contacts corresponding to the number of network contacts, a respective network connection being provided between a network contact and a device contact and a respective data/network connection being provided between a data/network contact and a network contact.

8. Coupling device according to claim 7, **characterised in that** it has two network contacts and two device contacts.

9. Coupling device according to claim 7 or 8, **characterised in that** a reactance coil is located in each network connection.

10. Coupling device according to claim 9, **characterised in that** the reactance coils each have an inductance of from 1 µH to 20 µH.

11. Coupling device according to any one of claims 6 to 10, **characterised in that** the network connection has an earth conductor network contact and the device connection has an earth conductor device contact which are connected to each other by an earth conductor network connection.

12. Coupling device according to claim 11, **characterised in that** the data/network connection has an earth conductor data/network contact which is connected to the earth conductor network contact by an earth conductor data/network connection.

13. Coupling device according to any one of claims 6 to 12, **characterised in that** the network connection is in the form of a network plug having contact pins for insertion into a network socket of the low-voltage electrical power supply network.

14. Coupling device according to any one of claims 6 to 13, **characterised in that** the device connection is in the form of a socket having contact bushes for the insertion of a network plug of a device to be supplied with electrical energy.

15. Coupling device according to any one of claims 6 to 14, **characterised in that** the network connection and the device connection are received in a common housing and the data/network connection is located at the end of a data/network cable which is guided out of the housing.

16. Coupling device according to any one of claims 6 to 14, **characterised in that** the data/network connection is in the form of a socket having contact bushes for the insertion of a network plug of a device to be supplied with electrical energy and the coupling device is fitted in a dimensionally stable housing, the housing being constructed in such a manner that the coupling device can be connected to the low-voltage electrical power supply network by means of its network connection, a first device to be supplied with electrical power can be connected to the device connection of the coupling device and a second device to be supplied with electrical power can be connected to the data/network connection of the coupling device.

## Revendications

1. Dispositif pour la transmission de messages par l'intermédiaire d'un réseau d'alimentation en courant basse tension (11), comprenant un premier et un deuxième terminal de données (13.2, 13.1), **caractérisé en ce que** le premier terminal de données (13.2) est raccordé au réseau d'alimentation en courant basse tension (11) par l'intermédiaire d'un dispositif de couplage (1, 1.2), qui comprend en plus d'un connecteur réseau (3) et d'un connecteur de terminal (4), un connecteur de données/réseau (7).

2. Dispositif selon la revendication 1, **caractérisé en ce que** le premier terminal de données comprend un connecteur de messages permettant d'envoyer et/ou de recevoir les messages ainsi qu'un connecteur réseau pour le raccordement au réseau d'alimentation en courant basse tension et **en ce qu'**il est relié, par l'intermédiaire de son connecteur réseau, au connecteur d'appareil du dispositif de couplage, avec son connecteur de messages par l'intermédiaire d'une liaison de données avec le connecteur de données/réseau du dispositif de couplage ou d'un deuxième dispositif de couplage et le dispositif de couplage ainsi que, le cas échéant, le deuxième dispositif de couplage est relié, par l'intermédiaixe de son connecteur réseau, au réseau d'alimentation en courant basse tension.

3. Dispositif selon la revendication 2, **caractérisé en ce que** le premier terminal de données est relié, par l'intermédiaire de son connecteur réseau au connecteur de l'appareil et par l'intermédiaire de la liaison de données au connecteur données/réseau du dispositif de couplage.

4. Dispositif selon la revendication 2 ou 3, **caractérisé en ce que** dans la liaison de données se trouvent un dispositif d'émission/réception avec un connecteur de messages pour envoyer ou recevoir les messages, un connecteur données/réseau pour envoyer ou recevoir un signal de transmission à haute fréquence ainsi que des moyens permettant de générer le signal de transmission à partir des messages ou de générer les messages à partir du signal de transmission , moyennant quoi le dispositif d'émission/réception est relié, par l'intermédiaire de son connecteur de messages, au connecteur de messages du premier terminal de données et par l'intermédiaire de son connecteur données/réseau au connecteur données/réseau du dispositif de couplage ou, le cas échéant du deuxième dispositif de couplage.

5. Dispositif selon l'une des revendications 1 à 4, **caractérisé en ce que** le dispositif se trouve à l'intérieur d'un bâtiment ou d'un complexe immobilier.

6. Dispositif de couplage (1, 1.2) plus particulièrement pour un dispositif selon l'une des revendications 1 à 5, **caractérisé en ce qu'**il comprend, en plus d'un connecteur réseau (3), pour le raccordement à un réseau d'alimentation en courant basse tension (11) et en plus d'un connecteur d'appareil (4) pour le raccordement d'un appareil (13.1, 13.2) alimenté en énergie électrique, un connecteur données/réseau (7) pour le raccordement d'un appareil supplémentaire (19.2) alimenté en énergie électrique ainsi que la transmission de signaux de messages à haute fréquence,

7. Dispositif de couplage selon la revendication 6, **caractérisé en ce que** le connecteur réseau comprend au moins deux contacts réseau pour le raccordement à un réseau d'alimentation en courant basse tension et au moins deux conducteurs de courant, c'est-à-dire un conducteur neutre et au moins un conducteur de phase, le connecteur de l'appareil comprend un nombre de contacts d'appareil correspondant au nombre de contacts réseau pour le raccordement d'un appareil alimenté en énergie électrique et le connecteur données/réseau comprend au moins deux et au plus un nombre de contacts de données/réseau correspondant au nombre des contacts réseau, moyennant quoi, entre un contact réseau et un contact d'appareil se trouve une liaison réseau et entre un contact de données/réseau et un contact de réseau se trouve une liaison données/réseau.

8. Dispositif de couplage selon la revendication 7, **caractérisé en ce qu'**il comprend deux contacts réseau et deux contacts d'appareil.

9. Dispositif de couplage selon la revendication 7 ou 8, **caractérisé en ce que** dans chaque liaison réseau se trouve une bobine d'induction.

10. Dispositif de couplage selon la revendication 9, **caractérisé en ce que** les bobines d'induction présentent chacune une inductance entre 1 µH et 20 µH.

11. Dispositif de couplage selon l'une des revendications 6 à 10, **caractérisé en ce que** le connecteur réseau comprend un contact réseau à conducteur de terre et le connecteur d'appareil comprend un contact réseau à conducteur de terre, reliés l'un à l'autre à l'aide d'une liaison réseau à conducteur de terre.

12. Dispositif de couplage selon la revendication 11, **caractérisé en ce que** le connecteur données/réseau comprend un contact données réseau à conducteur de terre relié au contact réseau à conducteur de terre par l'intermédiaire d'une liaison données/réseau à conducteur de terre.

13. Dispositif de couplage selon l'une des revendications 6 à 12, **caractérisé en ce que** le connecteur réseau est conçu comme une prise réseau avec des broches de contact destinées à un enfichage dans une prise femelle du réseau d'alimentation en courant basse tension.

14. Dispositif de couplage selon l'une des revendications 6 à 13, **caractérisé en ce que** le connecteur de l'appareil est conçu comme une prise femelle avec des douilles de contact destinées à l'enfichage d'une prise réseau d'un appareil alimenté en énergie électrique.

15. Dispositif de couplage selon l'une des revendications 6 à 14, **caractérisé en ce que** le connecteur réseau et le connecteur de l'appareil sont logés dans un boîtier commun et **en ce que** le connecteur données/réseau se trouve à l'extrémité d'un câble de données/réseau guidé hors du boîtier.

16. Dispositif de couplage selon l'une des revendications 6 à 14, **caractérisé en ce que** le connecteur données/réseau est conçu comme une prise femelle avec des douilles de contact pour l'enfichage d'une prise réseau d'un appareil alimenté en énergie électrique et le dispositif de couplage est inséré dans un boîtier rigide, moyennant quoi le boîtier est conçu de sorte que le dispositif de couplage puisse être raccordé, avec son connecteur réseau, au réseau d'alimentation en courant basse tension, à un premier appareil alimenté en courant au niveau du connecteur d'appareil du dispositif de couplage et à un deuxième appareil alimenté en courant au niveau du connecteur de données/réseau du dispositif de couplage.
